Europäisches Patentamt

European Patent Office

Office européen des brevets

(11) Publication number: **0 251 345**
**A2**

(12) **EUROPEAN PATENT APPLICATION**

(21) Application number: 87200518.6

(51) Int. Cl.⁴: **C05F 3/06** , C05F 3/00

(22) Date of filing: 23.03.87

(30) Priority: 26.06.86 NL 8601685
24.02.87 NL 8700461

(43) Date of publication of application:
**07.01.88 Bulletin 88/01**

(84) Designated Contracting States:
**AT BE CH DE ES FR GB GR IT LI LU NL SE**

(71) Applicant: **Bergsma, Jantinus**
**Sibculoseweg 74**
**NL-7676 PD Westerhaar(NL)**

(72) Inventor: **Bergsma, Jantinus**
**Sibculoseweg 74**
**NL-7676 PD Westerhaar(NL)**

(74) Representative: **ten Cate, Walter Enno Maria**
**van Heemskerkstraat 45**
**NL-7622 JH Borne(NL)**

(54) **Method for manufacturing manure materials, apparatus for applying this method, and manure materials obtained with the application of this method.**

(57) Manure materials, suited for the manuring of ornamental trees, fruit trees, maize and pasture land, various kinds of products in hothouses and in agriculture, are obtained from cow-, pig-and/or poultry-manure slurry by: storing the slurry with a stench-reducing and nitrogen-fixing material, dewatering the slurry and mixing the dewatered slurry with manure enrichment substances, composed of composted organic material, stench-reducing and further nitrogen-fixing material, coal and possibly lime products.

FIG.1

# Method for manufacturing manure materials, apparatus for applying this method, and manure materials obtained with the application of this method.

The present invention relates to a method for manufacturing manure materials, an apparatus for executing this method, and the manure materials obtained with the application of this method.

Numerous farms wrestle at this moment with the problem that they have enormous surpluses of manure. These surpluses are usually distributed over the land out of sheer necessity. This gives rise to situations when the amount of manure deposited on the land is sometimes 7 to 8 times the amount the soil can absorb. The consequence thereof is a gigantic pollution of soil and groundwater. The Netherlands alone is saddled with some 20 million tonnes of manure annually. Apart from legislative measures in this field, these problems can in practice be solved only by processing the surplus of manure somehow or other. The only form of manure processing taking place at the moment on an industrial basis is the drying of socalled firm, i.e. still with a moisture content of 35 to 40 %, manure substances. With such a processing method all kinds of undesired substances, such as heavy metals, are left behind, while large quantities of ammonia, amongst others, are given off directly into the outside air with all its consequences. Besides, the materials obtained with this method of manure processing are of such a composition that they are unsatisfactory, in particular for manuring purposes.

To obviate the above disadvantages fully or, at any rate to a considerable extent, a search was made for a form of manure processing, by which various usable substances are extracted from the manure and harmful substances are decomposed. The manure used for this process is in practice set free in the form of slurry, i.e. manure in an overdose of water, namely in the order of 95 %. This manure comprise organic components, viz. solid constituents consisting of celluloses, which are indigestible by the animals, and metabolites, i.e. carbohydrates and breakdown substances from the carbohydrate metabolism, fats and breakdown substances from the fat metabolism and proteins and breakdown substances from the albumin-metabolism, as well as inorganic components, viz. salts of heavy metals, such as Cu, Zn, Mn, and other salts.

A method for the processing of slurry is introduced in the periodical "Milieutechniek", No. 3/1986, pp. 78-79. With this method the slurry is filtered, whereupon the separated solid substances are composted. Next, methane generation takes place for the breakdown of metabolites and electrophoretic pre-defecation for further enzymatic breakdown of proteins to form simple amino acids, while electrodeposition of any heavy metals present occurs, which metals are extracted in the form of electrode sediment. The water is further evaporated, leaving the inorganic salts as residue.

It is an object of the present invention to provide a completely different method of manure processing, whereby notably the nitrogen from the albuminous metabolites is fixed and left in the material obtained in the manure processing apparatus and suited as humus. It is another object of the present invention to provide such a method of manure processing that a manure material showing exceptionally good manuring properties is obtained without any concentrations of substances harmful to the ground, groundwater, or vegetation.

Accordingly, the present invention provides a method for the manufacture of manure material by supplying a slurry contained in a manure storage room with a stench-reducing and nitrogen-fixing material, which nitrogen is obtained from nitrogenous compounds present in the slurry in the form of ammonium, dewatering the slurry taken from the manure storage room, and supplying the dewatered slurry with manure enrichment substances composed of composted organic material, stench-reducing and further nitrogen-fixing material, which nitrogen is obtained from nitrogenous compounds present in the dewatered slurry in the form of ammonium, as well as coal products and possibly lime products. According to the invention, the stench-reducing and nitrogen-fixing material, which nitrogen is obtained from nitrogenous compounds in the form of ammonium, consists of Carbomix (Deutsche Hyperphosphat GmbH at Budenheim/Rhein). Carbomix is composed of material from dump heaps of coal mines; this material has usually been exposed to every kind of weather for decades, causing the natural material to be enriched with potassium, lime and magnesium, while beside these nutritious elements nitrogen is also added through precipitation. The supply of Carbomix to the slurry prevents to a high degree the formation of ammonia, reducing to a great extent the stench pollution.

To further concentrate the dewatered slurry and to obtain a suitable manure material, manure enrichment substances, including for a considerable portion composted organic material, are added to the dewatered slurry. According to the invention, the composted organic material comprises wood refuse, the composting process including the steps of: forming a bottom layer of fresh, ground wood refuse; applying on said bottom layer a layer of further organic refuse material; adding moisture to the thus formed hot pile; allowing said hot pile to rot for a given period by the naturally present organisms; removing, mixing and dumping back a top layer of the hot pile comprising a portion of the wood refuse; removing, mixing and dumping back an ever greater portion of the hot pile each time after said given period until all of the material has rotted and no germs or seeds herein come up anymore.

According to the invention, the apparatus for applying the above-described method comprises: a manure storage room for slurry supplied with a stench-reducing and nitrogen-fixing material, which nitrogen is obtained from nitrogenous compounds in the form of ammnium; a dewatering unit supplied with the slurry from the manure storage room, in which dewatering unit water with the therein dissolved and thence carried substances is separated, while the remaining wet manure consisting of solid constituents is fed from the dewatering unit to a mixer, in which mixer manure enrichment substances are added to said remaining wet manure.

With the application of the method and the apparatus here described it is possible to obtain various manure materials, which are particularly suited for specific application in the manuring of ornamental trees, fruit trees, maize and pasture land, the manuring in hot houses for all kinds of flowers, plants, fruits and vegetables, or the manuring in agriculture.

The invention and its advantages will now be described in more detail with reference to the accompanying drawing, in which:

Fig. 1 is a block diagram of an embodiment of the manure processing apparatus according to the invention; and

Fig. 2 is a table showing a preferred composition of the various manure materials in percentages.

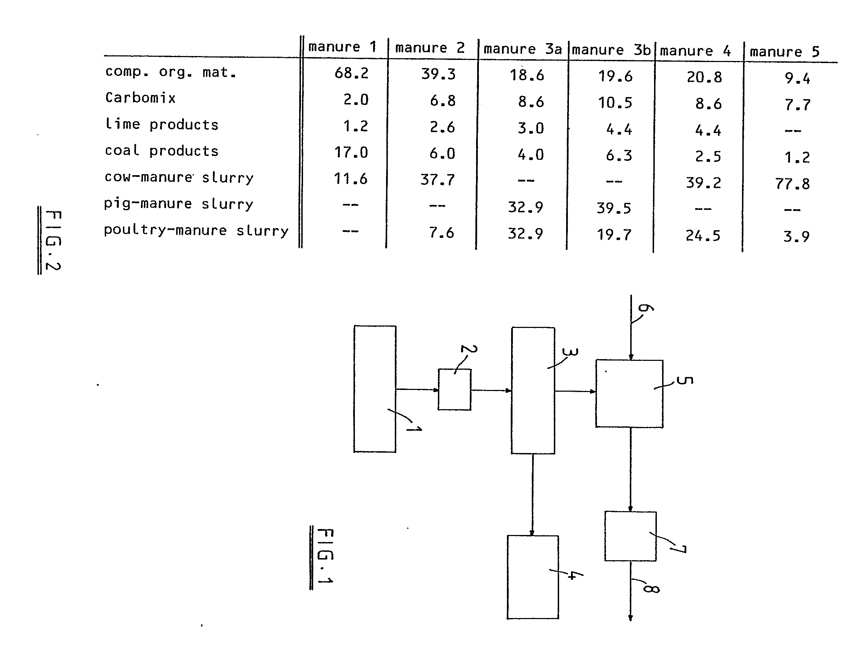

It is to be understood that this description with reference to Fig. 1 is made only by way of example and not as a limitation to the scope of the invention.

The manure processing apparatus shown in fig. 1 comprises a manure storage room 1. This storage room, preferably installed as manure cellar for the greater part below ground level, may contain various compartments for different kinds of manure. The manure floats in an overdose of water. The temperature of the slurry is maintained between 30 and 70 °C; below about 30 °C it is not possible to get the breakdown process of the various organic compounds started, while at a temperature in the order of 70 °C and greater the bacteria causing the breakdown process are destroyed. The manure cellar is of concrete and is resistant to temperatures of minimally 70 to 80 °C to be able to bear the consequences of a broken-down thermostat.

The manure cellar may further be provided with extraction means to remove the biogases, mainly methane gas liberated through the breakdown process; the manure cellar is closed off from the outside air. Carbomix or a material with an equivalent effect is added to the slurry in the manure cellar to fix for the greater part the nitrogen from albuminous metabolites or other nitrogenous compounds present in the manure in the form of ammonium; in this way the formation of ammonia is reduced by a factor in the order of 80 %. Through a space in the manure cellar, where a temperature in the order of 70 °C prevails to destroy the bacteria for the breakdown process, the slurry is brought in a dewatering unit 3 via a pump 2. Because of the slow action of filtering processes, it is preferred to use herein a centrifugal process, by which in principle any type of separator acting by centrifugal force is applicable. In dewatering unit 3 water containing the therein dissolved and thence carried substances is separated and preferably supplied to a purifier 4 to discharge or drain away the water on the one hand and the therein dissolved and thence carried substances on the other hand in a manner harmless to the environment.

The wet manure from dewatering unit 3, i.e. the dewatered slurry, is supplied to a mixer 5 and therein concentrated and enriched with manure enrichment substances supplied via input 6. These manure enrichment substances are composed of composted organic material, stench-reducing and further nitrogen-fixing material, which nitrogen is obtained from nitrogenous compounds present in the dewatered slurry in the form of ammonium, as well as coal products and, if required, lime products.

As the moisture content of the dewatered slurry to be supplied to mixer 5 will be between 20 and 60 % approximately, the moisture content of the material delivered by mixer 5 should be between 10 and 35 % approximately. If this is not attained, this material can still be passed through a dryer 7.

The properties of the material eventually obtained at output 8 and therewith the specific application for manuring in the agricultural and horticultural areas are determined by the type of slurry processed in the apparatus, as well as by the composition and the pretreatment of the composted organic material in the manure enrichment substances.

Manure suitable for processing is cow manure, pig manure and poultry manure.

The composted organic material may be obtained from the following components: fresh branches, sawdust, tree-bark, etc., straw, paper, peat, humus products of refuse from markets (such as plants, flowers, potting soil), as well as flower and garden refuse, leaf fall, hay from roadside grass and mushroom compost waste; these components are preferably used in pulverized form. Furthermore, it is possible to add the following components, preferably in powder form: humus products from household refuse (free from stones, glass and plastic) and humus products from rubbish dumps (also free from stones, glass and plastic). Also arable soil may be added to the material to be composted.

The properties of the manure material finally to be obtained are favourably influenced by adding fresh wood refuse to the material to be composted. However, the fresh wood refuse requires specific composting, the procedure being as follows: First the fresh wood (branches, sawdust, tree-bark, etc.) in a coarsely ground form (in particles of smaller than about 3 cm) is piled on a layer of about 50 cm, thus forming the bottom layer of the hot heap to be made up. Then, over this, a layer of further organic refuse material, also in a ground form, is applied, whereupon in the hot heap the rotting process effected by the naturally present organisms is started. In the starting phase of this rotting process it is necessary to add some moisture. The moisture content is to be increased preferably to about 50 % in order to obtain a well-going rotting process. About every six weeks the top layer, i.e. the further organic refuse material with the layer of wood refuse rotted in this period, is taken up, mixed and dumped back; this process is repeated until all the material has rotted and no germs and seeds therein come up anymore. Depending on the season, this takes six to twelve months. Thereafter the heated pile is taken up and added as manure enrichment material in mixer 5 to the dewatered slurry. It should be noted that a bottom layer of about 40 cm of the hot pile is left behind to serve as a basis for subsequent composting. When taken up, the material is passed through a sieve, and the coarse material (particles greater than 5 mm) is returned to the bottom layer.

As already stated, the nature and the application of the manure material to be obtained are determined by its composition. The table of Fig. 2 indicates the composition in percentages by weight for six manure materials to be obtained, viz. that of the composted organic material, the Carbomix, the lime and coal products and the various dewatered slurry types. Of the indicated manure materials, manure 1 is suited specially for the manuring of ornamental trees, manure 2 specially for the manuring of fruit trees, manures 3a and 3b specially for the manuring of maize and pasture land, manure 4 specially for the manuring in hothouses for all kinds of flowers, plants, fruits and vegetables, and finally manure 5 specially for manuring in agricultural areas. The percentages by weight in the table of Fig. 2 indicate a preferred composition. There is a spread of about 5 to 25 % in each of the figures indicated, while there is also a freedom in the composition of the composted organic material, as various constituents are fully exchangeable. For this reason, intervals within which the weight percentages of the various components in the composted organic material should lie cannot be given. A feasible composition of each of the manure materials 1 to 5 will be indicated by way of example.

Manure material 1.

This material is composed of about 63.0 to 72.0 % by weight, preferably 68.2 % by weight, of composted organic material; approximately 1.2 to 2.5 % by weight, preferably 2.0 % by weight, of Carbomix; approximately 0.8 to 1.6 % by weight, preferably 1.2 % by weight, of lime products; approximately 14.0 to 20.0 % by weight, preferably 17.0 % by weight, of coal products; and approximately 9.2 to 13.0 % by weight, preferably 11.6 % by weight, of dewatered cow-manure slurry.

The composted organic material was obtained from: 16.7 % by weight of fresh wood refuse, 1.7 % by weight of straw, 2.5 % by weight of paper, 33.2 % by weight of peat, 16.7 % by weight of humus products from rubbish dumps, 16.7 % by weight of humus products of refuse from markets, and 12.5 % by weight of arable soil.

Manure material 2.

This material is composed of approximately 35.0 to 45.0 % by weight, preferably 39.3 % by weight, of composted organic material; approximately 6.2 to 7.4 % by weight, preferably 6.8 % by weight, of Carbomix; approximately 2.1 to 3.0 % by weight, preferably 2.6 % by weight, of lime products; approximately 5.0 to 7.0 % by weight, preferably 6.0 % by weight, of coal products; approximately 32.0 to 44.0 % by weight, preferably 37.7 % by weight, of dewatered cow-manure slurry; and approximately 6.5 tot 8.8 % by weight, preferably 7.6 % by weight, of dewatered poultry-manure slurry.

The composted organic material was obtained from: 6.7 % by weight of fresh wood refuse, 1.7 % by weight of straw, 1.7 % by weight of paper, 5.0 % by weight of peat, 5.0 % by weight of hay from roadside grass, 3.3 % by weight of humus products from household refuse, 8.3 % by weight of humus products from rubbish dumps, 33.3 % by weight of flower, leaf and garden refuse, 13.3 % by weight of mushroom compost waste, and 21.7 % by weight of arable soil.

Manure material 3a.

This material is composed of approximately 15.0 tot 22.0 % by weight, preferably 18.6 % by weight, of composted organic material; approximately 7.8 tot 9.4 % by weight, preferably 8.6 % by weight, of Carbomix; approximately 2.5 to 3.5 % by weight, preferably 3.0 % by weight, of lime products; approximately 3.5 tot 4.5 % by weight, preferably 4.0 % by weight, of coal products; approximately 28.0 to 38.0 % by weight, preferably 32.9 % by weight, of dewatered pig-manure slurry; and approximately 28.0 to 38.0 % by weight, preferably 32.9 % by weight, of dewatered poultry-manure slurry.

The composted organic material was obtained from: 5.3 % by weight of fresh wood refuse, 5.3 % by weight of straw, 5.3 % by weight of paper, 26.3 % by weight of peat, 5.2 % by weight of humus products of refuse from markets, 15.8 % by weight of humus products from rubbish dumps, and 36.8 % by weight of arable soil.

Manure material 3b.

This material is composed of approximately 15.0 tot 25.0 % by weight, preferably 19.6 % by weight, of composted organic material; approximately 9.0 to 12.0 % by weight, preferably 10.5 % by weight, of Carbomix; approximately 3.8 tot 5.0 % by weight, preferably 4.4 % by weight, of lime products; approximately 5.5 tot 7.0 % by weight, preferably 6.3 % by weight, of coal products; approximately 35.0 to 45.0 % by weight, preferably 39.5 % by weight, of dewatered pig-manure slurry; and approximately 17.5 to 21.5 % by weight, preferably 19.7 % by weight, of dewatered poultry-manure slurry.

The composted organic material was obtained from 5.3 % by weight of fresh wood refuse, 5.3 % by weight of straw, 5.3 % by weight of paper, 26.0 % by weight of peat, 7.1 % by weight of humus products of refuse from markets, 17.0 % by weight of humus products from rubbish dumps, and 34.0 % by weight of arable soil.

Manure material 4.

This material is composed of approximately 15.0 tot 25.0 % by weight, preferably 20.8 % by weight, of composted organic material; approximately 7.8 to 9.4 % by weight, preferably 8.6 % by weight, of Carbomix; approximately 3.8 to 5.0 % by weight, preferably 4.4 % by weight, of lime products; approximately 2.0 to 3.0 % by weight, preferably 2.5 % by weight, of coal products; approximately 35.0 to 45 % by weight, preferably 39.2 % by weight, of dewatered cow-manured slurry; and approximately 20.0 tot 30.0 % by weight, preferably 24.5 % by weight, of dewatered poultry-manure slurry.

The composted organic material was obtained from: 2.8 % by weight of straw, 1.4 % by weight of paper, 14.4 % by weight of peat, 10.8 % by weight of humus products from household refuse, 1.4 % by weight of humus products from rubbish dumps, 17.8 % by weight of flowe, leaf and garden refuse, 17.8 % by weight of mushroom compost refuse, and 33.6 % by weight of arable soil.

Manure material 5.

This manure material is composed of approximately 7.0 to 12.0 % by weight, preferably 9.4 % by weight, of composted organic material; approximately 6.5 to 9.0 % by weight, preferably 7.7 % by weight, of Carbomix; approximately 0.8 to 1,6 % by weight, preferably 1.2 % by weight, of coal products; approximately 72.0 to 84.0 % by weight, preferably 77.9 % by weight, of dewatered cow-manure slurry; and approximately 3.4 tot 4.4 % by weight, preferably 3.9 % by weight, of dewatered poultry-manure slurry.

The composted organic material was obtained from: 5.0 % by weight of fresh wood refuse, 7.5 % by weight of straw, 5.0 % by weight of paper, 10.0 % by weight of peat, 5.0 % by weight of humus products of refuse from markets, 7.5 % by weight of humus products from household refuse, 5.0 % by weight of humus products from rubbish dumps, and 55.0 % by weight of arable soil.

## Claims

1. Method for the manufacture of manure material by supplying a slurry contained in a manure storage room with a stench-reducing and nitrogen-fixing material, which nitrogen is obtained from nitrogenous compounds present in the slurry in the form of ammonium, dewatering the slurry taken from the storage room, and supplying the dewatered slurry with manure enrichment substances composed of composted organic material, stench-reducing and further nitrogen-fixing material, which nitrogen is obtained from nitrogenous compounds present in the dewatered slurry in the form of ammonium, as well as coal products and possibly lime products.

2. Method as claimed in claim 1, characterised in that the moisture content of the dewatered slurry lies between 20 and 60 %.

3. Method as claimed in claim 1 or 2, characterised in that the mixture of dewatered slurry and manure enrichment substances is dried, whereupon the moisture content of said mixture lies between 10 and 35 %.

4. Method as claimed in claim 1, 2 or 3, characterised in that the stench-reducing and nitrogen-fixing material, which nitrogen is obtained from nitrogenous compounds in the form of ammonium, consists of Carbomix (Deutsche Hyperphosphat GmbH at Budenheim/ Rhein).

5. Method as claimed in any of the preceding claims,
characterised in that the composted organic material comprises wood refuse and that the composting process includes the steps of:
forming a bottom layer of fresh, ground wood refuse; applying on said bottom layer a layer of further organic refuse material; adding moisture to the thus formed hot pile; allowing said hot pile to rot for a given period by the naturally present organisms; removing, mixing and dumping back an ever greater portion of the hot pile each time after said given period until all of the material has rotted and no germs or seeds herein come up anymore.

6. Method as claimed in claim 5, characterised in that a top part of the completely rotted hot pile is passed through a sieve, whereupon the material passed through is added to the dewatered slurry, while the material left behind and the remaining bottom part of the completely rotted hot pile are used as top layer for a subsequent composting process.

7. Apparatus for applying the method as claimed in any of the preceding claims, characterised in that said apparatus comprises: a manure storage room for storing slurry, to which slurry is added a stench-reducing and nitrogen-fixing material, which nitrogen is obtained from nitrogenous compounds in the form of ammonium; and a dewatering unit receiving the slurry from the manure storage room and separating water containing the therein dissolved and thence carried substances, while the remaining wet manure consisting of solid constituent is fed from the dewatering unit to a mixer, in which mixer manure enrichment substances, as claimed in claim 1, are added to said remaining wet manure.

8. Apparatus as claimed in claim 7, characterised in that the temperature in the manure storage room is maintained at a value between 30 and 70 °C and preferably between 45 and 55 °C.

9. Manure material manufactured as claimed in any of the claims 1 to 6.

10. Manure material, as claimed in claim 9, suited specially for the manuring of ornamental trees, characterised in that said manure material is composed of:

63.0 - 72.0 % by weight, preferably 68.2 % by weight, of composted organic material;
1.5 - 2.5 % by weight, preferably 2.0 % by weight, of Carbomix;
0.8 - 1.6 % by weight, preferably 1.2 % by weight, of lime products;
14.0 - 20.0 % by weight, preferably 17.0 % by weight, of coal products;
9.2 - 13.0 % by weight, preferably 11.6 % by weight, of dewatered cow-manure slurry.

11. Manure material, as claimed in claim 9, suited specially for the manuring of fruit trees, characterised in that said manure material is composed of:
35.0 - 45.0 % by weight, preferably 39.3 % by weight, of composted organic material;
6.2 - 7.4 % by weight, preferably 6.8 % by weight, of Carbomix;
2.1 - 3.0 % by weight, preferably 2.6 % by weight, of lime products;
5.0 - 7.0 % by weight, preferably 6.0 % by weight, of coal products;
32.0 - 44.0 % by weight, preferably 37.7 % by weight, of dewatered cow-manure slurry;
6.5 - 8.5 % by weight, preferably 7.6 % by weight, of dewatered poultry-manure slurry.

12. Manure material, as claimed in claim 9, suited specially for the manuring of maize and pasture land, characterised in that said manure material is composed of:
15.0 - 22.0 % by weight, preferably 18.6 % by weight, of composted organic material;
7.8 - 9.4 % by weight, preferably 8.6 % by weight, of Carbomix;
2.5 - 3.5 % by weight, preferably 3.0 % by weight, of lime products;
3.5 - 4.5 % by weight, preferably 4.0 % by weight, of coal products;
28.0 - 38.0 % by weight, preferably 32.9 % by weight, of dewatered pig-manure slurry;
28.0 - 38.0 % by weight, preferably 32.9 % by weight, of dewatered poultry-manure slurry.

13. Manure material, as claimed in claim 9, suited specially for the manuring of maize and pasture land, characterised in that said manure material is composed of:
15.0 - 25.0 % by weight, preferably 19.6 % by weight, of composted organic material;
9.0 12.0 % by weight, preferably 10.5 % by weight, of Carbomix;
3.8 - 5.0 % by weight, preferably 4.4 % by weight, of lime products;
5.5 - 7.0 % by weight, preferably 6.3 % by weight, of coal products;
35.0 - 45.0 % by weight, preferably 39.5 % by weight, of dewatered pig-manure slurry;
17.5 - 21.5 % by weight, preferably 19.7 % by weight, of dewatered poultry-manure slurry.

14. Manure material, as claimed in claim 9, suited specially for the manuring in hothouses for all kinds of flowers, plants, fruits and vegetables, characterised in that said manure material is composd of:

15.0 - 25.0 % by weight, preferably 20.8 % by weight, of composted organic material;

7.8 - 9.4 % by weight, preferably 8.6 % by weight, of Carbomix;

3.8 - 5.0 % by weight, preferably 4.4 % by weight, of lime products;

2.0 - 3.0 % by weight, preferably 2.5 % by weight, of coal products;

35.0 - 45.0 % by weight, preferably 39.2 % by weight, of dewatered cow-manure slurry;

20.0 - 30.0 % by weight, preferably 24.5 % by weight, of dewatered poultry-manure slurry.

15. Manure material, as claimed in claim 9, suited specially for the manuring in agriculture, characterised in that said manure material is composed of:

7.0 - 12.0 % by weight, preferably 9.4 % by weight, of composted organic material;

6.5 - 9.0 % by weight, preferably 7.7 % by weight, of Carbomix;

0.8 - 1.6 % by weight, preferably 1.2 % by weight, of coal products;

72.0 - 84.0 % by weight, preferably 77.9 % by weight, of dewatered cow-manure slurry;

3.4 - 4.4 % by weight, preferably 3.9 % by weight, of dewatered poultry-manure slurry.

| | manure 1 | manure 2 | manure 3a | manure 3b | manure 4 | manure 5 |
|---|---|---|---|---|---|---|
| comp. org. mat. | 68.2 | 39.3 | 18.6 | 19.6 | 20.8 | 9.4 |
| Carbomix | 2.0 | 6.8 | 8.6 | 10.5 | 8.6 | 7.7 |
| lime products | 1.2 | 2.6 | 3.0 | 4.4 | 4.4 | -- |
| coal products | 17.0 | 6.0 | 4.0 | 6.3 | 2.5 | 1.2 |
| cow-manure slurry | 11.6 | 37.7 | -- | -- | 39.2 | 77.8 |
| pig-manure slurry | -- | -- | 32.9 | 39.5 | -- | -- |
| poultry-manure slurry | -- | 7.6 | 32.9 | 19.7 | 24.5 | 3.9 |

FIG.2

FIG.1

0 251 345